Europäisches Patentamt

European Patent Office

Office européen des brevets

(11) Numéro de publication: **0 462 347 A1**

# DEMANDE DE BREVET EUROPEEN

(21) Numéro de dépôt: 90420292.6

(22) Date de dépôt: **21.06.90**

(51) Int. Cl.5: **A01N 63/00, A01N 59/04**

(43) Date de publication de la demande:
27.12.91 Bulletin 91/52

(84) Etats contractants désignés:
AT BE CH DE DK ES FR GB GR IT LI LU NL SE

(71) Demandeur: **Gianfranceschi, Gianni**
**7 Rue Francois Genin**
**F-69005 Lyon(FR)**

Demandeur: **Booker, Richard E.**
**c/o Bel Air Estate Ltd. Rivière des Anguilles**
**Grande Savane(MU)**

(72) Inventeur: **Gianfranceschi, Gianni**
**7 Rue Francois Genin**
**F-69005 Lyon(FR)**
Inventeur: **Booker, Richard E.**
**c/o Bel Air Estate Ltd. Rivière des Anguilles**
**Grande Savane(MU)**

(74) Mandataire: **Brachotte, Charles et al**
**RHONE-POULENC AGROCHIMIE BP 9163-09**
**F-69263 Lyon Cedex 1(FR)**

(54) **Composition insecticide et procédé correspondant, tous deux inoffensifs pour les êtres vivants à sang chaud.**

(57) Composition insecticide utile pour tuer les insectes munis d'une carapace ou cuticule chitineuse, en particulier les blattes, caractérisé en ce qu'elle comprend un mélange, de préférence sous forme de granulé, d'une levure et d'un produit alimentaire en lui-même connu, et d'une quantité d'eau inférieure à 15 %.

La présente invention est relative à une nouvelle composition insecticide à base de produits de la famille des levures, ainsi qu'à un procédé mettant en oeuvre cet insecticide.

Une caractéristique particulièrement avantageuse de la composition insecticide et du procédé de l'invention est qu'ils sont à la fois :
- efficaces pour la destruction des insectes ;
- inoffensifs pour les êtres vivants à sang chaud, notamment les êtres humains, les mammifères ou les oiseaux, domestiques ou sauvages.

On connaît l'importance du problème posé par la destruction des insectes, notamment en agriculture ou dans les pays à climat tropical ou équatorial. Chacun connaît les invasions de sauterelles qui ravagent des régions complètes. On sait également que les cafards pullulent dans les pays chauds, notamment dans les locaux d'habitation, dans les placards, dans les bateaux, dans les voitures automobiles, dans les lieux publics, dans les hopitaux, etc...Malgré beaucoup d'efforts, il est plus que difficile de vraiment se débarasser de ces insectes, et il est encore plus difficiles de s'en débarasser à l'aide de produits ne mettant pas en oeuvre de produits agrochimiques connus habituellement comme insecticides, notamment l'acide borique.

Pour lutter contre la présence de ces insectes, il est connu d'utiliser des produits chimiques qui les détruisent. Malheureusement, ces produits sont la plupart du temps toxiques également contre les êtres à sang chaud, tels qu'humains, mammifères, oiseaux, ou autres.

La présente invention a pour but d'éviter ces inconvénients, en proposant une nouvelle composition insecticide ainsi qu'un procédé mettant en oeuvre ces compositions, ceux-ci permettant à la fois :
- de détruire efficacement les insectes tels que sauterelles, cafards et analogues ;
- de rester parfaitement inoffensifs pour les enfants, les êtres humains, les mammifères, les volailles et, plus généralement, tous les animaux domestiques.

Le procédé selon l'invention concerne la destruction des cafards ou analogues dont le corps est entouré d'une carapace ou cuticule chitineuse. Cette cuticule est caractérisée par une relative rigidité, et surtout par un manque presque total d'élasticité à la traction.

Le procédé insecticide selon l'invention consiste à faire manger par les insectes, dont le corps est entouré d'une carapace ou cuticule chitineuse rigide, une composition susceptible de provoquer un gonflement interne lorsqu'il est ingéré, ce gonflement provoquant la mort soit par éclatement du corps soit par bouchage ou tout autre perturbation du système digestif dudit insecte.

Pour la mise en oeuvre de ce procédé, l'invention propose l'utilisation de compositions constituant un aliment pour insecte, ces compositions faisant elle-même l'objet de l'invention.

Les compositions selon l'invention sont des compositions insecticides utiles pour tuer les insectes munis d'une carapace ou cuticule chitineuse, en particulier les blattes. Ces compositions sont caractérisées en ce qu'elles comprennnent un mélange d'une levure et d'un produit alimentaire en lui-même connu, et d'une quantité d'eau inférieure à 15 %.

Généralement, les compositions selon l'invention contiennent 20 à 80 % de levure, de préférence de 40 à 70 %.

De manière préférée, le produit insecticide selon l'invention ne contient que le produit du genre levure comme agent à propriété insecticide. Selon un autre aspect de l'invention, le produit insecticide selon l'invention ne contient pas de produit classifié habituellement comme pesticide agrochimique, ou insecticide agrochimique comme par exemple l'acide borique ou la terre (ou la silice) de diatomée.

Comme levure utilisable dans l'invention, on peut citer d'une manière générale les produits capables, après ingestion, de produire un dégagement de bulles gazeuses au sein des substances auxquelles ils sont mélangés. Il peut donc s'agir de levures alimentaires soit naturelles, soit artificielles ou chimiques, comme par exemple les bicarbonates, et spécialement le bicarbonate de sodium également connu sous le nom d'hydrogénocarbonate de sodium.

Suivant une caractéristique de l'invention, le gonflement de la levure, spécialement du bicarbonate, est déclenché par son contact avec les sucs digestifs de l'insecte.

Suivant une autre caractéristique de l'invention, la levure est choisie parmi les levures généralement utilisées en boulangerie, ou en pâtisserie, ou dans les industries alimentaires.

Suivant une autre caractéristique de l'invention, les compositions selon l'invention contenant de la levure se présentent de préférence sous forme de granulé. Ces granulés ont avantageusement une structure capable de s'effriter. Leur taille est généralement comprise entre 0,5 mm et 5 mm.

Suivant une autre caractéristique de l'invention, le produit alimentaire contenu dans les compositions insecticides selon l'invention, est choisi dans le groupe constitué par le lait condensé, le lait concentré; la confiture, le miel, les sirops de fruits ou de sucre, les mélasses; la poudre d'oeuf; le beurre, notamment de cacahuète; les farines, notamment la farine de blé; et les autres produits alimentaires naturellement recherchés par les insectes. Les compositions selon l'invention contiennent avantageusement un ou plusieurs agents attractifs et/ou appétants et/ou adjuvants connus en soi, ainsi que, éventuellement des supports inertes. Ainsi les compositions selon l'invention peuvent contenir, à titre d'additifs, les produits suivants: les onions en poudre, les aminoacides, notamment l'acide aspartique et l'acide glutamique; les phéromones; les attractifs sexuels; les lactones.

Suivant une autre caractéristique de l'invention, le produit insecticide est à faible teneur d'humidité, ce qui lui assure un gonflement maximum lorsqu'il se trouve imprégné par les sucs gastriques d'un insecte, après ingestion. De manière générale la teneur en eau des compositions selon l'invention est comprise entre 1 et 15 % , de préférence entre 2 et 10 %

Le fonctionnement est le suivant : lorsqu'un insecte ingère les compositions insecticides selon l'invention, le contact avec ses sucs digestifs déclenche le dégagement gazeux qui provoque le gonflement de la levure. Aussitôt, se développe dans l'appareil digestif de l'insecte, une élévation de pression qui provoque la mort de l'insecte, soit par éclatement de la carapace ou cuticule chitineuse de l'insecte, soit par éclatement ou bouchage du système digestif de l'insecte.

Ces compositions sont particulièrement efficaces, puisqu'elles attirent les insectes, avant de les détruire.

Par ailleurs, les compositions selon l'invention sont entièrement inoffensives pour les êtres à sang chaud, dont le corps est entouré de tissus élastiques, peau et analogues. Si donc, l'un d'eux vient à manger une composition selon l'invention, les conséquences en sont parfaitement anodines : il se produit dans l'abdomen un gonflement que les tissus environnants suivent sans difficulté.

En particulier, l'ingestion des compositions insecticides de l'invention par un enfant ou par un animal, sauvage ou domestique, ne présente aucun risque. Aucune toxicité n'est à craindre.

En pratique, il est commode de présenter ce produit insecticide sous la forme de boulettes, de pilules ou de granulés, secs ou mi-secs.

Les compositions selon l'invention peuvent aussi, dans certains cas, déclencher, parmi les insectes, une destruction en chaîne. Lorsqu'un cafard meurt, d'autres cafards viennent et le mangent et meurent à leur tour, et ainsi de suite.

L'exemple suivant, donné à titre non limitatif, illustre l'invention et montre comment elle peut être mise en oeuvre.

EXEMPLE

On mélange intimément 35 parties en poids de lait concentré sucré avec 65 parties de levure chimique constituée de 20 % en poids de pyrophosphate de sodium (support inerte) et 80 % de bicarbonate de sodium. On obtient, par malaxage, une pâte qui est transformée en granulés cylindriques dont les dimensions approxmatives sont de 5 mm de diamètre et 3 mm de long. Ces granulés sont soumis à un séchage de 15 heures à 23°C, après quoi leur teneur en eau est de 3 %.

Dans des boites en verre de taille 80 x 30 x 50 cm on met 25 blattes mâles adultes (appelées aussi cafards ou Blattella Germanica) agées de 1 à 4 semaines. Ces boites sont pourvues d'un point d'eau et d'une cachette pour les blattes. La température est de 23°C et l'humidité relative de 55 %. Deux boites contiennent chacunes 3 g des granulés préparés ci-avant réunis dans des coupelles de verre placées dans les boites. On observe une mortalité de 100 % au bout de 14 jours avec les compositions selon l'invention.

**Revendications**

1. Composition insecticide utile pour tuer les insectes munis d'une carapace ou cuticule chitineuse, en particulier les blattes, caractérisé en ce qu'elle comprend un mélange d'une levure et d'un produit alimentaire en lui-même connu, et d'une quantité d'eau inférieure à 15 %.

2. Composition selon la revendication 1 caractérisée en ce qu'elle contient un seul type de matière active à propriétés insecticides, à savoir la levure

3. Composition selon l'une des revendications 1 à 2 caractérisée en ce qu'elle ne contient pas de produit agrochimique connu comme insecticide, comme l'acide borique ou la terre de diatomée.

4. Composition selon l'une des revendications 1 à 3 caractérisée en ce que la levure est une levure chimique, de préférence un bicarbonate

5. Composition selon la revendication 4 caractérisée en ce que la levure est le bicarbonate de sodium

6. Composition selon l'une des revendications 1 à 5 caractérisée en ce qu'elle contient 20 à 80 % de levure, de préférence de 40 à 70 %.

7. Composition selon l'une des revendications 1 à 6 caractérisée en ce qu'elle contient 1 à 15 % d'eau, de préférence de 2 à 10 %.

8. Composition selon l'une des revendications 1 à 7 caractérisée en ce qu'elle contient en outre des supports et/ou adjuvants et/ou appétants et/ou attractifs

9. Composition selon l'une des revendications 1 à 8 caractérisée en ce qu'elle est sous forme de granulés de taille comprise entre 0,5 et 5 mm.

10. Composition selon l'une des revendications 1 à 9 caractérisée en ce que la levure est une levure alimentaire en elle-même connue, dont le gonflement est déclenché par son contact avec les sucs digestifs de l'insecte.

11. Composition selon l'une des revendications 1 à 10 caractérisée en ce que le produit alimentaire utilisé est choisi dans le groupe constitué par le lait concentré, la confiture, la farine, et autres produits alimentaires naturellement recherchés par les insectes.

12. Composition selon l'une des revendications 1 à 11 caractérisée en ce qu'elle est conditionnée sous la forme de boulettes, pilules, ou granulés secs.

13. Procédé pour la destruction d'insectes, tels que les cafards, ou analogues, dont le corps est entouré d'une carapace chitineuse, en leur donnant à manger un produit destructeur, caractérisé en ce qu'on utilise pour cela un produit qui gonfle avec ingestion, et provoque la mort de l'insecte par éclatement de son corps.

14. Procédé selon la revendication 13 caractérisé en ce qu'on utilise une composition selon l'une des revendications 1 à 12

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| E | FR-A-2 641 944 (R.E. BOOKER et al.)<br>* Document entier * | 1-14 | A 01 N 63/00<br>A 01 N 59/04 |
| | — — — | | |
| X | DE-A-3 439 452 (G. PIETRUCHA)<br>* Document entier * | 1-14 | |
| | — — — | | |
| X | DE-A-3 712 487 (R. ZÖLDE)<br>* Document entier * | 1 | |
| | — — — | | |
| X | FR-A-4 688 80 (G. LARONCE)<br>* Document entier * | 13 | |
| A | | 1-12,14 | |
| | — — — | | |
| X | CA-A-1 185 172 (A. CARLE)<br>* Page 3, lignes 1-20; revendications * | 1,8 | |
| | — — — | | |
| X | CHEMICAL ABSTRACTS, vol. 78, no. 21, 28 mai 1973, page 86, abrégé no. 132710b, Columbus, Ohio, US; JP-A-73 01 135 (IKARI PHARMACEUTICALS CO., LTD) 09-01-1973<br>* Abrégé * | 1,4-6,8 | |
| | — — — | | **DOMAINES TECHNIQUES RECHERCHES (Int. Cl.5)** |
| X | CHEMICAL ABSTRACTS, vol. 101, no. 19, 5 novembre 1984, page 233, abrégé no. 165590j, Columbus, Ohio, US; & JP-A-59 128 317 (KYODO SANGYO K.K.) 24-07-1984<br>* Abrégé * | 1 | A 01 N |
| | — — — — — | | |

Le présent rapport de recherche a été établi pour toutes les revendications

| Lieu de la recherche | Date d'achèvement de la recherche | Examinateur |
|---|---|---|
| La Haye | 18 février 91 | DONOVAN T.M. |